(19) Europäisches Patentamt
European Patent Office
Office européen des brevets

(11) **EP 2 891 917 B1**

(12) **EUROPEAN PATENT SPECIFICATION**

(45) Date of publication and mention
of the grant of the patent:
**06.09.2017 Bulletin 2017/36**

(51) Int Cl.:
***G02B 26/08*** (2006.01)

(21) Application number: **15150099.8**

(22) Date of filing: **05.01.2015**

(54) **Optical deflection device, optical scanning apparatus, image display apparatus, and image forming apparatus**

Optische Deflektorvorrichtung, optische Abtastvorrichtung, Bildanzeigevorrichtung sowie Bilderzeugungsvorrichtung

Dispositif de déviation optique, appareil de balayage optique, appareil d'affichage d'image et appareil de formation d'image

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.01.2014 JP 2014000507**

(43) Date of publication of application:
**08.07.2015 Bulletin 2015/28**

(73) Proprietor: **Ricoh Company, Ltd.**
**Tokyo 143-8555 (JP)**

(72) Inventors:
• **Nakagawa, Jun**
**Tokyo 143-8555 (JP)**
• **Hashiguchi, Tsuyoshi**
**Tokyo 143-8555 (JP)**
• **Nanjyo, Takeshi**
**Tokyo 143-8555 (JP)**

(74) Representative: **J A Kemp**
**14 South Square**
**Gray's Inn**
**London WC1R 5JJ (GB)**

(56) References cited:
**EP-A1- 2 495 600       EP-A1- 2 495 601**
**EP-A1- 2 848 978       US-A- 3 916 226**

• **FLEMING ANDREW J: "Precision charge drive with low frequency voltage feedback for linearization of piezoelectric hysteresis", 2013 AMERICAN CONTROL CONFERENCE, IEEE, 17 June 2013 (2013-06-17), pages 6022-6026, XP032475756, ISSN: 0743-1619 ISBN: 978-1-4799-0177-7 [retrieved on 2013-08-14]**
• **DEVASIA S ET AL: "A Survey of Control Issues in Nanopositioning", IEEE TRANSACTIONS ON CONTROL SYSTEMS TECHNOLOGY, IEEE SERVICE CENTER, NEW YORK, NY, US, vol. 15, no. 5, 1 September 2007 (2007-09-01), pages 802-823, XP011190940, ISSN: 1063-6536, DOI: 10.1109/TCST.2007.903345**

**Description**

BACKGROUND

Technical Field

The present invention relates to an optical deflection device, an optical scanning apparatus, an image display apparatus, and an image forming apparatus.

Background Art

Small-sized optical deflection devices to deflect and scan light beam can be configured with a base, a movable member having a reflection face, and a flexible beam. The movable member and the flexible beam can be formed with the base integrally using micro machining technology such as micro processing technology of silicon and glass, which is an application of semiconductor manufacturing technologies.

As to a configuration of the optical deflection device, a thin film piezoelectric member, which is prepared from piezoelectric material of thin film, is used as an actuator. As to the optical deflection device using the piezoelectric actuator, thin film piezoelectric member is formed on a surface of a cantilever. In this configuration, expansion and shrinking of the piezoelectric member along the face direction occurs by piezoelectric effect of the piezoelectric member, and the expansion and shrinking of the piezoelectric member is transmitted to the cantilever, used as a supporter, with which the cantilever can be oscillated in the up-and- down direction.

Compared to a combination of two optical deflection devices that each optical deflection device conducts one dimensional scanning, by using an optical deflection device that can conduct two dimensional optical scanning in the horizontal scanning and the vertical scanning, the optical deflection device can be designed small in size, and can be manufactured with lesser cost. As to a configuration of two dimensional scanning, resonant drive using mechanical resonance frequency is used for an optical scanning in the horizontal direction while non-resonant drive is used for an optical scanning in the vertical direction.

As to driving in the horizontal direction using mechanical resonance for the two dimensional optical scanning, one end of a cantilever is fixed and supported by a frame while the other end of the cantilever is oscillatable by piezoelectric driving. Torque generated by the oscillation of the cantilever is transmitted to a flexible beam such as a torsion bar connected to the other end of the cantilever, with which a mirror disposed on one end of the torsion bar can be oscillated. With this configuration, a greater scanning angle (or scanning speed) can be achieved with lower voltage drive for the optical deflection device designed small in size.

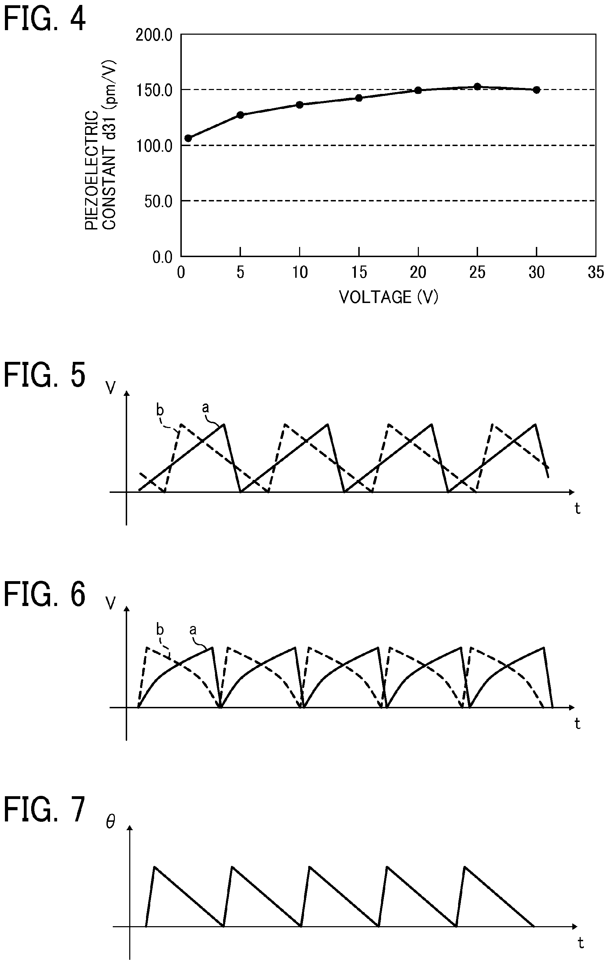

To achieve higher resolution of displayed image and display of uniformed image in a display face, raster scanning is required, in which non-resonant drive is used for an optical scanning in the vertical direction. Ideal timewise change of optical scanning angle in the vertical direction using non-resonant drive is preferably linear optical scanning as illustrated in FIG. 7, but the timewise change of optical scanning angle may not become linear due to some reasons.

When an optical scanning is conducted in two axes, higher harmonic wave of non-resonant drive in the vertical direction (sub-scanning direction) interferes with resonance frequency caused by a configuration in the sub-scanning direction, with which flapping occurs in the sub-scanning, and thereby a scanning speed becomes uneven.

A two dimensional scanner drive unit disclosed in JP-2011-107505-A includes a speed detector to detect speed of optical scanning, in which a speed detection signal is generated. Based on the generated speed detection signal, a feedback to a scanner drive unit is conducted to reduce unevenness of scanning speed of the optical scanning.

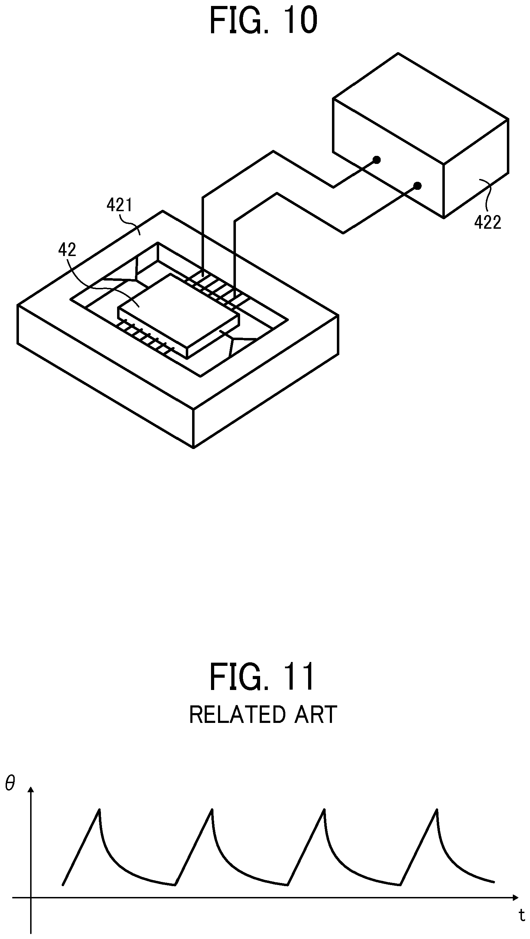

Typically, when conducting the raster scanning, an optical scanning is conducted using a sawtooth wave as a drive signal. However, when a drive is conducted for the raster scanning in the vertical direction, deformation amount of piezoelectric material caused by voltage application becomes different depending on voltages. Therefore, when the optical scanning is conducted using the sawtooth wave as the drive signal, the scanning speed becomes uneven. For example, as illustrated in FIG. 11, timewise change of optical scanning angle becomes a curve line.

The two dimensional scanner drive unit disclosed in JP-2011-107505-A has a configuration to cope with distortion of scanning by vibration, but has no configuration to cope with uneven scanning speed caused by voltage application using the above mentioned sawtooth wave.

EP 2 495 600 A1 discloses a driver for an optical deflector using complex-sinusoidal-wave driven voltages and method for setting the same.

EP 2 495 601 A1 discloses a driver for an optical deflector using two asynchronous sawtooth drive voltages and a method for setting the same.

EP 2 848 978 A1 discloses an optical deflecting device, apparatus including the same, and a method of controlling the optical deflection device. Further pertinent prior art is described in US 3 916 226 A.

SUMMARY

According to the present invention, there is provided an optical deflection device, optical scanning apparatus, image display apparatus and image forming apparatus as defined in any one of the accompanying claims.

In one aspect of the present invention, an optical deflection device is devised. The optical deflection device includes a pair of zig-zag beams, each of the zig-zag beams including a plurality of first beams and a plurality of second beams arranged with a zig-zag pattern, a frame to support the zig-zag beams, a reflection mirror, supported by the zig-zag beams, to deflect light, a plurality of piezoelectric elements disposed on the first beams and the second beams of the zig-zag beams, a voltage application unit to apply a first waveform voltage to the piezoelectric elements disposed on the first beams, and a second waveform voltage to the piezoelectric elements disposed on the second beams to flexibly deform the first beams and the second beams of the zig-zag beams. The reflection mirror is oscillate-able by the flexible deformation of the first beams and the second beams. The voltage application unit adjusts voltage applied to the piezoelectric elements depending on piezoelectric constant of the piezoelectric elements to set the oscillation of the reflection mirror at a constant speed. As to the above described one aspect of the present invention, an optical deflection device that can conduct an optical scanning at a constant speed can be provided.

BRIEF DESCRIPTION OF THE DRAWINGS

A more complete appreciation of the disclosure and many of the attendant advantages and features thereof can be readily obtained and understood from the following detailed description with reference to the accompanying drawings, wherein:

FIG. 1 is a schematic configuration of an image display apparatus employing an optical deflection device according to a first example embodiment;
FIG. 2 is a plan view of a configuration of the optical deflection device according to the first example embodiment;
FIG. 3 is a perspective view of a configuration of another optical deflection device of the first example embodiment;
FIG. 4 is a graph of piezoelectric constant with respect to voltage applied to the optical deflection device of the first example embodiment;
FIG. 5 is an example of voltage applied to the optical deflection device of the first example embodiment;
FIG. 6 is an example of voltage applied to the optical deflection device of the first example embodiment after correction;
FIG. 7 is an oscillation of a movable member of the optical deflection device of the first example embodiment;
FIG. 8 is a schematic configuration of an image forming apparatus including an optical writing unit employing the optical deflection device of the first example embodiment;
FIG. 9 is a schematic configuration of the optical writing unit employing the optical deflection device of the first example embodiment;
FIG. 10 is a schematic view of an optical scanner employing the optical deflection device of the first example embodiment; and
FIG. 11 is an example of oscillation of a movable member of conventional optical deflection devices.

The accompanying drawings are intended to depict exemplary embodiments of the present invention and should not be interpreted to limit the scope thereof. The accompanying drawings are not to be considered as drawn to scale unless explicitly noted, and identical or similar reference numerals designate identical or similar components throughout the several views.

DETAILED DESCRIPTION

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views shown in the drawings, specific terminology is employed for the sake of clarity, the present disclosure is not limited to the specific terminology so selected and it is to be understood that each specific element includes all technical equivalents that operate in a similar manner and achieve a similar result. Referring now to the drawings, apparatus or system according to one or more example embodiments are described hereinafter.

(Configuration of first example embodiment)

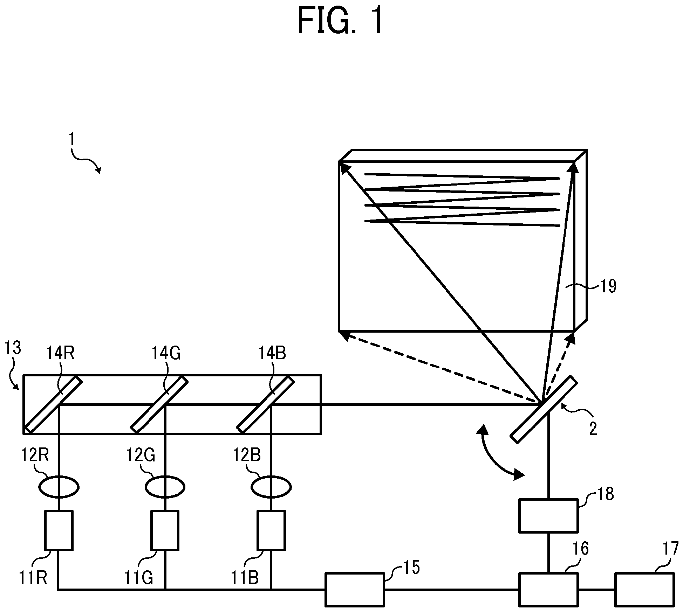

A description is given of a configuration of an image display apparatus 1 including an optical deflection device of a first example embodiment with reference to FIG.1. The image display apparatus 1 includes, for example, an optical deflection device 2, a laser diode (LD) driver 15, light sources 11R, 11G, 11B connected to the LD driver 15, and collimator lenses 12R, 12G, 12B. The light source 11R emits red light, the light source 11G emits green light, and the light source 11B emits blue light. The collimator lenses 12R, 12G, and 12B respectively collimate light emitted from the light sources 11R, 11G, and 11B.

The image display apparatus 1 further includes a light path synthesizing prism 13, disposed after the light sources 11R, 11G, and 11B, to synthesize light using one or more dichroic mirrors. Specifically, the light path synthesizing prism 13 includes reflectors 14R, 14G, and 14B. The reflector 14R reflects a laser beam having a wavelength of red color. The reflector 14G is formed with a dichroic film that reflects a laser beam having a wavelength of green color, and passes through a laser beam of red color. The reflector 14B is formed with a dichroic film that reflects a laser beam having a wavelength of blue color, and passes through a laser beam of red color and a laser beam of green color.

The optical deflection device 2 is disposed after the light path synthesizing prism 13. A screen 19 is used as a projection face for projecting images. The image display apparatus 1 further includes an optical deflection drive unit 18, a control unit 16, and a memory 17. The optical deflection device 2 is connected to the optical deflection drive unit 18. The control unit 16 is connected to the LD driver 15, the optical deflection drive unit 18, and the memory 17.

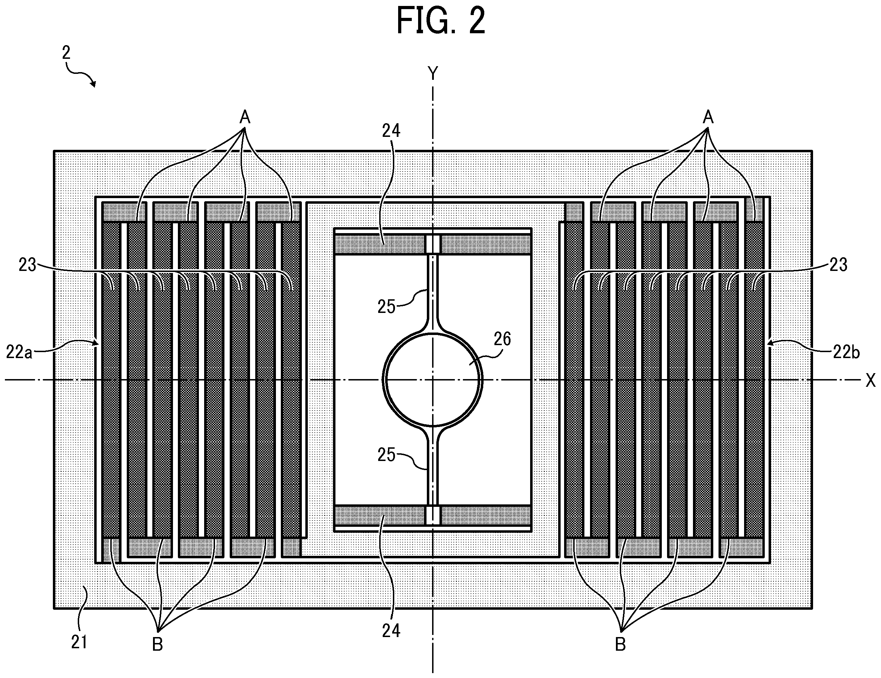

A description is given of a configuration of the optical deflection device 2 with reference to FIG.2. As illustrated in FIG.2, the optical deflection device 2 includes, for example, a frame 21, and a zig-zag beams 22a/22b disposed on the frame 21. Further, the zig-zag beams 22a/22b is disposed with a piezoelectric element 23 and a reflection mirror 26.

The piezoelectric element 23 can be formed on the zig-zag beams 22a/22b by applying lead zirconate titanate (PZT) using a sputtering method and a spinner method using sol-gel solution.

A description is given of a configuration around the reflection mirror 26 with reference to FIG.2. The reflection mirror 26 is oscillatably or rotatably supported by a pair of the torsion bars 25 with respect to the zig-zag beams 22a/22b. One end of the torsion bar 25 is supported by one end of the piezoelectric cantilever 24, and the other end of the piezoelectric cantilever 24 is supported by the frame 21.

(Operation of first example embodiment)

A description is given of an operation of the image display device 1 employing the optical deflection device 2 of the first example embodiment. Light emitted from the light sources 11R, 11G, 11B are respectively collimated by the collimator lenses 12R, 12G, 12B as parallel light. For example, the light source 11R employs a light source that emits red laser having a wavelength of 640 nm, the light source 11G employs a light source that emits green laser having a wavelength of 520 nm, and the light source 11B employs a light source that emits blue laser having a wavelength of 450 nm.

Collimated laser beams enter the light path synthesizing prism 13. The light path synthesizing prism 13 synthesizes three light paths into one light path, and the synthesized laser beam enters the optical deflection device 2, and then the optical deflection device 2 scans the laser beam two dimensionally to form an image on the screen 19. The light path synthesizing prism 13 is used as a light path synthesizing unit.

The image formation on the screen 19 using a combiner can be conducted by two dimensional scanning of laser beam by the optical deflection device 2 and an intensity modulation of each of the light sources such as a laser light source. In this image formation process, the LD driver 15 transmits an intensity modulation signal to each light source, and the optical deflection drive unit 18 transmits a signal of scanning direction of light on the screen 19 to the optical deflection device 2. The control unit 16 controls the LD driver 15 and the optical deflection drive unit 18 used for forming an image.

A description is given of scanning in the horizontal direction, which is a main scanning direction, with reference to FIG.2. By driving the piezoelectric cantilever 24, twisting occurs to the torsion bar 25 that supports the reflection mirror 26, with which the reflection mirror 26 oscillates about the Y-axis. In this configuration, the piezoelectric cantilever 24 is driven by a sine wave, and mechanical resonance is used to oscillate the reflection mirror 26. Specifically, by applying voltage with a sine wave of about 2 kHz, the reflection mirror 26 oscillates at 2 kHz by a twisting effect of the torsion bar 25. For example, an oscillation angle of the reflection mirror 26 is set about -15 degrees to +15 degrees.

A description is given of scanning in the vertical direction, which is a sub-scanning direction, with reference to FIG.2. Each of the zig-zag beams 22a/22b includes a plurality of first beams A and a plurality of second beams B. As illustrated in FIG.2, the plurality of first beams A and the plurality of second beams B are alternately formed with a zig-zag pattern while the first beams A and B are adjacently faced with each other, and the piezoelectric element 23 is disposed on each of the first beams A and second beams B. Two types of sawtooth wave voltage, having different wave patterns, are applied to each of the first beams A and second beams B, in which one type of sawtooth wave voltage is applied to the first beams A, and the other one type of sawtooth wave voltage is applied to the second beams B.

With this configuration, the adjacent first beams A and B flexibly deform different directions, and the deformation is cumulated, with which the zig-zag beams 22a/22b are driven and flexibly deformed. By cumulating the flexible deformation of the first beams A and B, the frame 21 rotates about the X-axis, and then the reflection mirror 26 oscillates about the X-axis depending on the rotation of the frame 21.

FIG. 5 is a sawtooth wave voltage applied to the beam A, which is also referred to as a first waveform voltage, and a sawtooth wave voltage applied to the beam B, which is also referred to as a second waveform voltage. As illustrated in FIG. 5, a sawtooth wave voltage (see solid line a) applied to the beam A, and a sawtooth wave voltage (see dot line b) applied to the beam B, can be symmetrical. An absolute value of a rate of rising time of the sawtooth wave voltage applied to the beam A and an absolute value of a rate of falling time of the sawtooth wave voltage applied to the beam B are set to the same, and an absolute value of a rate of falling time of the sawtooth wave voltage applied to the beam A and an absolute value of a rate of rising time of the sawtooth wave voltage applied to the beam B are set to the same for one cycle, which means the rate of rising time and the falling time of the sawtooth wave voltage are switched between the sawtooth wave voltage applied to the beam A and the sawtooth wave voltage applied to the beam B.

As to the voltage application pattern, as illustrated in FIG. 5, a phase of sawtooth wave applied to the beam A (FIG.2) and a phase of sawtooth wave applied to the beam B (FIG.2) are shifted, and a maximum value of voltage applied to the beam A and a maximum value of voltage applied to the beam B are set independently. As such, a maximum value and a phase of the first waveform voltage and a maximum value and a phase of the second waveform voltage can be adjusted independently for each of the first waveform voltage and the second waveform voltage.

In the raster scanning based on non-resonant drive, an optical scanning is conducted by using, for example, a sawtooth wave of about 60 Hz, in which a drive frequency can be shifted for about several Hz in relation with a resonant frequency.

In this process, deformation amount corresponding to applied voltage, which is a piezoelectric constant, is measured, and further a wave pattern of sawtooth wave voltage applied to the beam A and a wave pattern of sawtooth wave voltage applied to the beam B are corrected based on the piezoelectric constant variably changed depending on applied voltage, and an optimized wave pattern is applied to drive the optical scanning.

A description is given of measurement of piezoelectric constant and optimization of applying voltage. The piezoelectric material used for the piezoelectric element 23 typically employs PZT formed by the above mentioned sputtering method and sol-gel method. The PZT has property that deformation amount becomes different depending on applied voltages, which means the piezoelectric constant becomes different depending on applied voltages.

FIG. 4 is an example of data of piezoelectric constant measured in experiments by changing applied voltages, in which the horizontal axis indicates applied voltages. In this measurement, a cantilever configuration was prepared, and deformation amount of a piezoelectric element was measured by changing applied voltages using the laser Doppler method, and parameter values shown in Table 1 and Table 2 were input into the following formula 1 to measure the piezoelectric constant d31.

$$\delta = \frac{3L^2}{2t_p} \cdot \frac{2AB(1+B)}{A^2B^4 + 2A(2B + 3B^2 + 2B^3) + 1} \cdot d_{31}E$$

(Formula 1)

Table 1: Input item

| Name | Parameter | Value | Unit |
|---|---|---|---|
| Young ratio of Silicon | Esi | $1.70 \times 10^{11}$ | Pa |
| Young ratio of PZT | Epzt | $9.00 \times 10^{10}$ | Pa |
| Thickness of Si | Tsi | $4.00 \times 10^{-5}$ | m |

(continued)

| Name | Parameter | Value | Unit |
|------|-----------|-------|------|
| Length of Cantilever | L | $3.50 \times 10^{-3}$ | m |
| Thickness of PZT | Tpzt | $2.00 \times 10^{-9}$ | m |

Table 2: Computed Value

| Parameter | Value |
|-----------|-------|
| A | Esi/Epzt |
| B | Tsi/Tpzt |
| E | V/Tpzt |

Based on this property, as illustrated in FIG. 6, timewise waveform of application voltage is corrected based on a change rate of the piezoelectric constant with respect to voltages so that the reflection mirror 26, which is a movable member, oscillates with a constant speed as illustrated in FIG. 7. Further, the measured piezoelectric constant with respect to the applied voltages is stored in the memory 17, and the control unit 16 refers the measured piezoelectric constant from the memory 17.

(Effect of first example embodiment)

The zig-zag beams 22a/22b can be driven by applying voltage to the piezoelectric element 23. With this configuration, an optical scanning in the vertical direction about the X-axis can be conducted with lower voltage.

Compared to other piezoelectric materials, PZT has better conversion efficiency of electricity-mechanical energy conversion, and can be prepared by the above mentioned known methods with lesser cost. However, the PZT has a property that piezoelectric constant changes (i.e., not constant) depending on applied voltages. Therefore, even if deformation is to be generated with a condition of constant speed to conduct optical scanning with a linear pattern, the linear optical scanning cannot be conducted, which means the mirror cannot be moved at a constant speed.

Therefore, as above described, by computing the piezoelectric constant changed variably depending on applied voltages in advance, voltage that can set oscillation of a mirror with a linear pattern can be applied. By employing the optical deflection device 2 of the first example embodiment for an image display apparatus, uneven brightness and distortion of image pattern can be prevented, with which uniform image can be displayed. Further, a mirror can be oscillated with a constant speed by setting a suitable drive signal, which is confirmed by experiments.

Further, by employing the method of the first example embodiment, images can be displayed with evenly by adjusting a drive signal without using a dedicated detection device and a complex signal processing.

Further, even if processing error occurs to a manufacturing process of an optical deflection element, and a little fluctuation occurs to the piezoelectric material, such errors can be compensated by an adjustment mechanism of voltage waveform. Therefore, evenness of brightness in the sub-scanning direction can be enhanced by moving the mirror at a constant speed in the sub-scanning direction, and errors caused by the processing can be compensated, and the yield rate of manufacturing process can be enhanced.

(Configuration of second example embodiment)

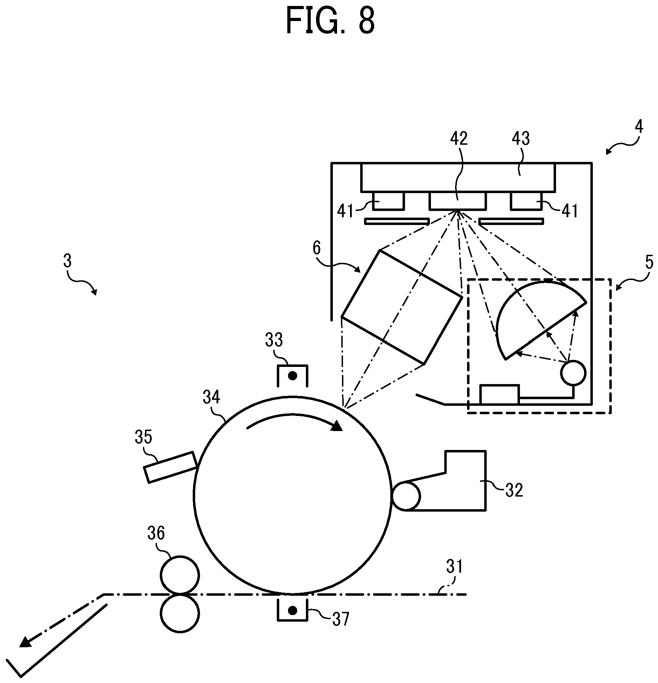

A description is given of a configuration of a second example embodiment with reference FIGs. 8 to 10. As illustrated in FIG. 8, an image forming apparatus 3 includes, for example, an optical writing unit 4, a developing unit 32, a charging unit 33, a photoconductor drum 34, a cleaning unit 35, a fixing unit 36, and a transfer unit 37 to form an image on a recording sheet 31.

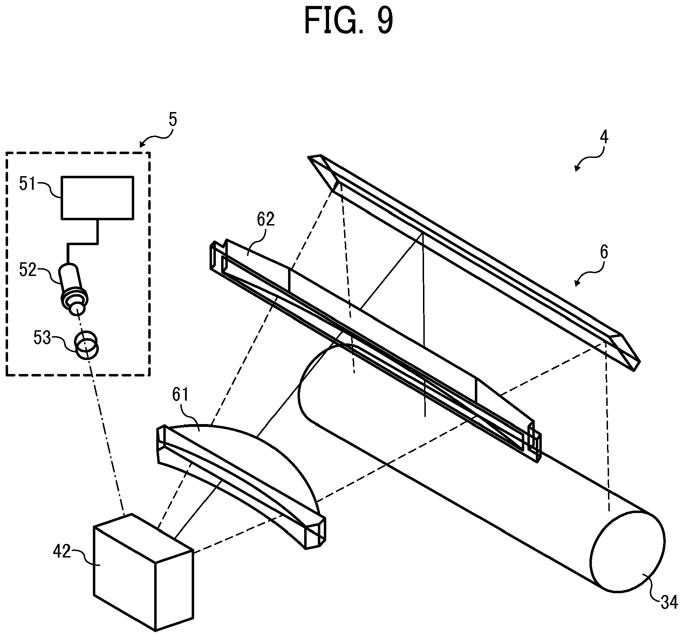

As illustrated in FIG. 8, the optical writing unit 4 includes an image forming optical system 5, an integrated circuit 41, an optical scanner 42, and a scan optical system 6. The optical scanner 42 is mounted on a circuit board 43 and included in the optical writing unit 4. The optical scanner 42 has the same configuration of the optical deflection device 2 of the first example embodiment. Further, as illustrated in FIG. 9, the image forming optical system 5 includes, for example, a light source driver 51, a light source 52, and a collimator lens 53. Further, the scan optical system 6 includes, for example, a first lens 61, and a second lens 62. With this configuration, the optical writing unit 4 can function as an optical scanning apparatus.

As illustrated in FIG. 10, the optical scanner 42 is surrounded by a package member 421. The package member 421 is made of material such as resin and ceramic. The upper and lower electrodes of the optical scanner 42 are electrically connected to a drive circuit 422.

(Operation of second example embodiment)

A description is given of an operation of the second example embodiment. As illustrated in FIG. 9, one or more laser beams emitted from the light source 52, modulated based on a recording signal of the light source driver 51, are collimated by the collimator lens 53 as parallel light, and then the optical scanner 42 deflects the laser beams. Then, the first lens 61 and the second lens 62 are used to guide the laser beams on a scan face such as a surface of photoconductor drum 34 along an axial direction of the photoconductor drum 34.

In this process, voltage is applied between the upper and lower electrodes of the optical scanner 42 by the drive circuit 422 (FIG. 10). In this process, the optical scanner 42 can be operated same as the optical deflection device 2 of the first example embodiment, in which the drive circuit 422 is used as a voltage application unit.

A description is given of a subsequent operation with reference to FIG. 8. The photoconductor drum 34 is charged by the charging unit 33. Then, the photoconductor drum 34, rotating in a direction indicated by an arrow, is written or scanned by the laser beam, with which an electrostatic latent image is formed on the photoconductor drum 34.

The electrostatic latent image is developed by the developing unit 32 as a toner image, and the toner image is transferred onto the recording sheet 31 by the transfer unit 37. The transferred toner image is fixed or fused on the recording sheet 31 by the fixing unit 36. After passing a portion facing the transfer unit 37, the surface of the photoconductor drum 34 is cleaned by the cleaning unit 35 to remove toner remaining on the photoconductor drum 34.

Further, instead of the photoconductor drum 34, a belt type photoconductor can be used. Further, the toner image can be transferred onto a transfer member other than a recording sheet at first, and then the toner image is transferred to a recording sheet from the transfer member.

(Effect of second example embodiment)

Power consumption of a reflection mirror disposed in the optical scanner 42 of the second example embodiment can be set smaller than power consumption used for driving a multi-faceted mirror, with which power saving of the image forming apparatus 3 can be enhanced. Because wind noise caused by vibration of a base plate of a reflection mirror can be smaller than wind noise of the multi-faceted mirror, noise level of the image forming apparatus 3 can be reduced. Further, an installation space of the optical writing unit 4 can be set smaller than an installation space of a multi-faceted mirrors. Further, heat generation by the reflection mirror can be little, with which the optical scanner 42 can be designed compact in size, and thereby the image forming apparatus 3 can be designed compact in size.

Further, a conveyance or transport mechanism of the recording sheet 31, a drive mechanism of the photoconductor drum 34, a control unit of the developing unit 32 and the transfer unit 37, and a drive system of the light source can employ configurations employed for conventional image forming apparatuses.

As to the first example embodiment, the screen 19 is scanned with laser beam two dimensionally by the optical deflection device 2 to project an image. Instead of a screen, a diffusion plate and a semi-transparent plate can be used to generate a virtual image to configure a head-up display.

As to the first and second example embodiments, three colors of RGB are used as light sources and two dimensional scanning by the optical deflection device 2 to project a color image. Further, one light source can be used to project a monochrome image.

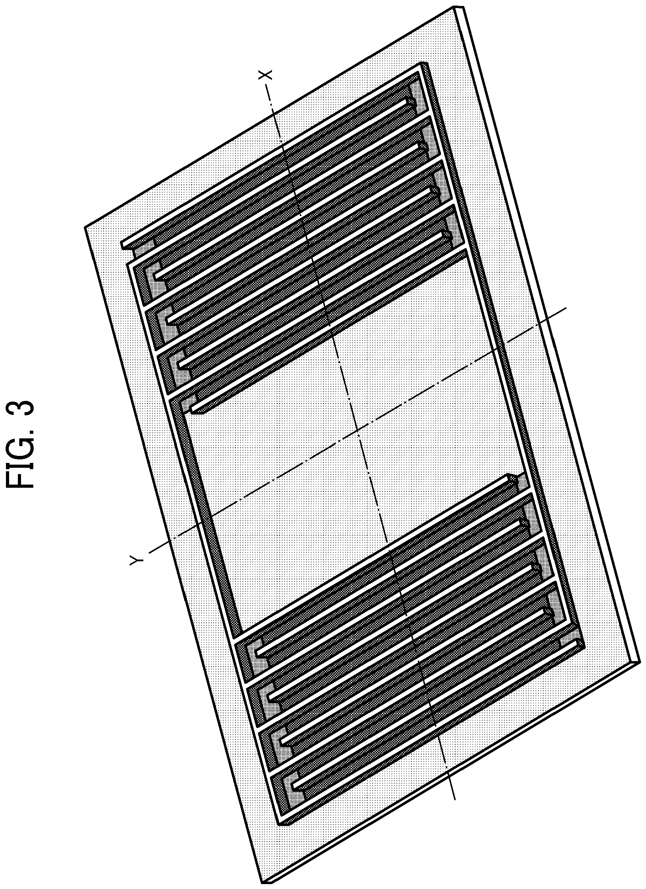

Further, as to the optical deflection device of the first and the second example embodiments, scanning is conducted by the optical deflection device for two axes. Further, an optical deflection device of one dimensional scanning type illustrated in FIG.3, which uses only non-resonant raster scanning, can be employed similarly.

As to the above described example embodiments, an optical deflection device that can conduct an optical scanning at a constant speed can be provided.

Numerous additional modifications and variations are possible in light of the above teachings. It is therefore to be understood that within the scope of the appended claims, the disclosure of the present invention may be practiced otherwise than as specifically described herein. For example, elements and/or features of different examples and illustrative embodiments may be combined each other and/or substituted for each other within the scope of this disclosure and appended claims.

**Claims**

**1.** An optical scanning apparatus comprising:

an optical deflection device (2), comprising:

a pair of zig-zag beams (22a, 22b), each of the zig-zag beams (22a, 22b) including a plurality of first beams (A) and a plurality of second beams (B) arranged with a zig-zag pattern;
a frame (21) to support the zig-zag beams (22a, 22b);
a reflection mirror (26), supported by the zig-zag beams (22a, 22b), to deflect light;
a plurality of piezoelectric elements (23) disposed on the first beams (A) and the second beams (B) of the zig-zag beams (22a, 22b);
a voltage application unit (422) to apply a first waveform voltage to the piezoelectric elements (23) disposed on the first beams (A), and a second waveform voltage to the piezoelectric elements (23) disposed on the second beams (B) to flexibly deform the first beams (A) and the second beams (B) of the zig-zag beams (22a, 22b),
wherein the reflection mirror (26) is oscillatable by the flexible deformation of the first beams (A) and the second beams (B),

the apparatus **characterized by**:

a memory (17) storing the measured piezoelectric constant with respect to changed applied voltage as information relating to the variation of the piezoelectric constant with respect to applied voltage; a control unit (16) to control the voltage application unit (422) to apply a time-varying waveform voltage to the piezoelectric elements (23), to set the oscillation of the reflection mirror (26) at a constant speed, wherein the time-varying waveform voltage is corrected by the control unit (16) based on said information stored in the memory.

2. An optical scanning apparatus according to claim 1, wherein the voltage application unit (422) adjusts a maximum value and a phase of the first waveform voltage and a maximum value and a phase of the second waveform voltage independently.

3. An optical scanning apparatus according to claim 1 or claim 2, the optical deflection device (2) of claim 1, wherein the oscillation of the reflection mirror (26) is set at the constant speed during a time period of deflecting the light.

4. An optical scanning apparatus according to any one of claims 1 to 3, wherein each of the piezoelectric elements (23) is made of lead zirconate titanate (PZT).

5. An optical scanning apparatus (4) according to any one of claims 1 to 4 further comprising:

an image forming optical system (5) to form an image using light deflected by the optical deflection device (2).

6. An image display apparatus (1), comprising:

the optical scanning apparatus (4) of claim 5;
a plurality of light sources (11R, 11G, 11B) to emit a plurality of laser beams having different wavelength; and
a light path synthesizing unit (13) to synthesize light paths of the plurality of laser beams to one light path,
wherein the optical scanning apparatus (4) of claim 4 scans a laser beam, synthesized by the light path synthesizing unit (13), on a projection face to project an image.

7. An image forming apparatus (3), comprising:

the optical scanning apparatus (4) of claim 4: and
a photoconductor (34) optically scannable by the optical scanning apparatus (4) to form a latent image on the photoconductor (34).

**Patentansprüche**

1. Optische Abtasteinrichtung, die Folgendes umfasst:

eine optische Deflektorvorrichtung (2), die Folgendes umfasst:

ein Paar Zickzackstrahlen (22a, 22b), wobei jeder der Zickzackstrahlen (22a, 22b) eine Vielzahl erster Strahlen (A) und eine Vielzahl zweiter Strahlen (B) beinhaltet, die in einem Zickzackmuster platziert sind; einen Rahmen (21) zum Stützen der Zickzackstrahlen (22a, 22b); einen Reflexionsspiegel (26), der von den Zickzackstrahlen (22a, 22b) gestützt wird, um Licht zu deflektieren; eine Vielzahl von piezoelektrischen Elementen (23), die auf den ersten Strahlen (A) und den zweiten Strahlen (B) der Zickzackstrahlen (22a, 22b) angeordnet sind; eine Spannungsanlegeeinheit (422), um eine erste Wellenformspannung an die piezoelektrischen Elemente (23) anzulegen, die auf den ersten Strahlen (A) angeordnet sind, und eine zweite Wellenformspannung an die piezoelektrischen Elemente (23), die auf den zweiten Strahlen (B) angeordnet sind, um die ersten Strahlen (A) und die zweiten Strahlen (B) der Zickzackstrahlen (22a, 22b) flexibel zu verformen, wobei der Reflexionsspiegel (26) durch die flexible Verformung der ersten Strahlen (A) und der zweiten Strahlen (B) oszillierbar ist,

wobei die Einrichtung **gekennzeichnet ist durch**:

einen Speicher (17), der die gemessene piezoelektrische Konstante mit Bezug auf eine geänderte angelegte Spannung als Information speichert, die sich auf die Abweichung der piezoelektrischen Konstante mit Bezug auf eine angelegte Spannung bezieht; eine Steuereinheit (16), um die Spannungsanlegeeinheit (422) zu steuern, um eine zeitlich variierende Wellenformspannung an die piezoelektrischen Elemente (23) anzulegen, um die Oszillation des Reflexionsspiegels (26) auf eine konstante Geschwindigkeit einzustellen, wobei die zeitlich variierende Wellenformspannung von der Steuereinheit (16) auf Basis der im Speicher gespeicherten Information korrigiert.

2. Optische Abtasteinrichtung nach Anspruch 1, wobei die Spannungsanlegeeinheit (422) einen maximalen Wert und eine Phase der ersten Wellenformspannung und einen maximalen Wert und eine Phase der zweiten Wellenformspannung unabhängig anpasst.

3. Optische Abtasteinrichtung nach Anspruch 1 oder 2, die optische Deflektorvorrichung (2) nach Anspruch 1, wobei die Oszillation des Reflexionsspiegels (26) während eines Zeitraums des Deflektierens des Lichts auf die konstante Geschwindigkeit eingestellt ist.

4. Optische Abtasteinrichtung nach einem der Ansprüche 1 bis 3, wobei jedes der piezoelektrischen Elemente (23) aus Bleizirkonattitanat (PZT) besteht.

5. Optische Abtasteinrichtung (4) nach einem der Ansprüche 1 bis 4, die ferner Folgendes umfasst:

ein optisches Bilderzeugungssystem (5), um unter Verwendung von Licht, das von der optischen Deflektorvorrichung (2) deflektiert wird, ein Bild zu erzeugen.

6. Bildanzeigeeinrichtung (1), die Folgendes umfasst:

die optische Abtasteinrichtung (4) nach Anspruch 5; eine Vielzahl von Lichtquellen (11R, 11G, 11B), um eine Vielzahl von Laserstrahlen unterschiedlicher Wellenlänge zu emittieren; und eine Lichtpfadsynthetisierungseinheit (13), um Lichtpfade der Vielzahl von Laserstrahlen zu einem Lichtpfad zu synthetisieren, wobei die optische Abtasteinrichtung (4) nach Anspruch 4 einen Laserstrahl, der von der Lichtpfadsynthetisierungseinheit (13) synthetisiert wird, auf einer Projektionsfläche abtastet, um ein Bild zu projizieren.

7. Bilderzeugungseinrichtung (3), die Folgendes umfasst:

die optische Abtasteinrichtung (4) nach Anspruch 4 und einen Fotoleiter (34) der von der optischen Abtasteinrichtung (4) optisch abtastbar ist, um auf dem Fotoleiter (34) ein latentes Bild zu erzeugen.

**Revendications**

1. Appareil de balayage optique, comprenant :

   un dispositif de déflexion optique (2), comprenant :

      une paire de faisceaux en zigzag (22a, 22b), chacun des faisceaux en zigzag (22a, 22b) incluant une pluralité de premiers faisceaux (A) et une pluralité de seconds faisceaux (B) agencés avec un motif en zigzag ;
      un cadre (21) pour supporter les faisceaux en zigzag (22a, 22b) ;
      un miroir de réflexion (26), supporté par les faisceaux en zigzag (22a, 22b), pour défléchir de la lumière ;
      une pluralité d'éléments piézoélectriques (23) disposés sur les premiers faisceaux (A) et les seconds faisceaux (B) des faisceaux en zigzag (22a, 22b) ;
      une unité d'application de tension (422) pour appliquer une première tension à forme d'onde sur les éléments piézoélectriques (23) disposés sur les premiers faisceaux (A), et une seconde tension à forme d'onde sur les éléments piézoélectriques (23) disposés sur les seconds faisceaux (B) pour déformer de façon flexible les premiers faisceaux (A) et les seconds faisceaux (B) des faisceaux en zigzag (22a, 22b), dans lequel le miroir de réflexion (26) peut osciller par l'intermédiaire de la déformation flexible des premiers faisceaux (A) et des seconds faisceaux (B),

   l'appareil étant **caractérisé par** :

      une mémoire (17) stockant la constante piézoélectrique mesurée par rapport à une tension appliquée changée en tant qu'informations concernant la variation de la constante piézoélectrique par rapport à la tension appliquée ;
      une unité de commande (16) pour commander l'unité d'application de tension (422) pour appliquer une tension à forme d'onde variant en temps sur les éléments piézoélectriques (23), pour régler l'oscillation du miroir de réflexion (26) à une vitesse constante, dans lequel la tension à forme d'onde variant en temps est corrigée par l'unité de commande (16) en fonction desdites informations stockées dans la mémoire.

2. Appareil de balayage optique selon la revendication 1, dans lequel l'unité d'application de tension (422) ajuste une valeur maximum et une phase de la première tension à forme d'onde et une valeur maximum et une phase de la seconde tension à forme d'onde indépendamment.

3. Appareil de balayage optique selon la revendication 1 ou la revendication 2, dispositif de déflexion optique (2) selon la revendication 1, dans lequel l'oscillation du miroir de réflexion (26) est réglée à la vitesse constante durant une période de déflexion de la lumière.

4. Appareil de balayage optique selon l'une quelconque des revendications 1 à 3, dans lequel chacun des éléments piézoélectriques (23) est fait de titanate zirconate de plomb (PZT).

5. Appareil de balayage optique (4) selon l'une quelconque des revendications 1 à 4, comprenant en outre :

   un système optique de formation d'image (5) pour former une image en utilisant de la lumière défléchie par le dispositif de déflexion optique (2).

6. Appareil d'affichage d'image (1), comprenant :

   l'appareil de balayage optique (4) selon la revendication 5 ;
   une pluralité de sources de lumière (11R, 11G, 11B) pour émettre une pluralité de faisceaux laser possédant une longueur d'onde différente ; et
   une unité de synthétisation de trajets de lumière (13) pour synthétiser des trajets de lumière de la pluralité de faisceaux laser en un trajet de lumière,
   dans lequel l'appareil de balayage optique (4) selon la revendication 4 balaye un faisceau laser, synthétisé par l'unité de synthétisation de trajets de lumière (13), sur une face de projection pour projeter une image.

7. Appareil de formation d'image (3), comprenant :

l'appareil de balayage optique (4) selon la revendication 4 : et
un photoconducteur (34) pouvant être optiquement balayé par l'appareil de balayage optique (4) pour former une image latente sur le photoconducteur (34).

# FIG. 1

FIG. 2

FIG. 3

# FIG. 4

# FIG. 5

# FIG. 6

# FIG. 7

# FIG. 8

# FIG. 9

# FIG. 10

# FIG. 11
## RELATED ART

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011107505 A
- EP 2495600 A1
- EP 2495601 A1
- EP 2848978 A1
- US 3916226 A